# EUROPÄISCHE PATENTSCHRIFT

(11) **EP 0 523 207 B1**
(45) Veröffentlichungstag und Bekanntmachung des Hinweises auf die Patenterteilung: **15.06.1994**
(21) Anmeldenummer: 92903093.0
(22) Anmeldetag: 30.01.1992
(51) Int. Cl.: B64F 1/22

(54) **SCHLEPPFAHRZEUG FÜR FLUGZEUGE**
AIRCRAFT TOWING VEHICLE
VEHICULE DE REMORQUAGE D'AVIONS

(30) Priorität: 31.01.1991 DE 4102861; 23.09.1991 DE 4131649
(43) Veröffentlichungstag der Anmeldung: 20.01.1993
(73) Patentinhaber: Krauss-Maffei Aktiengesellschaft, 80997 München (DE)
(72) Erfinder: POLLNER, Jürgen, D-8000 München 60 (DE); TRUMMER, Gregor, D-8134 Aschering (DE)
(74) Vertreter: Rucker, Bernd, Dipl.-Ing.
(86) Internationale Anmeldenummer: DE9200057
(87) Internationale Veröffentlichungsnummer: WO9213762

(56) Entgegenhaltungen:
- EP-A- 0 276 779
- EP-A- 0 331 363
- EP-A- 0 394 534
- US-A- 2 877 913

## Beschreibung

Die Erfindung betrifft ein Schleppfahrzeug für Flugzeuge von der im Oberbegriff des Anspruchs 1 angegebenen Art.

Bei zugstangenlosen Schleppfahrzeugen für Flugzeuge wird das Bugrad in der nach hinten offenen, gabelförmigen Ausnehmung des Schleppfahrzeugs auf einer dort vorgesehenen Abstützfläche, die als Plattform, Schaufel, Rampe oder dergleichen ausgebildet ist, abgestützt und festgelegt. Um das Bugrad auf die Abstützfläche zu bringen, ist ein Aufnahmevorgang erforderlich, für den hauptsächlich zwei Bewegungsabläufe in Frage kommen. Bei der einen Variante wird das Bugrad von einer am Schleppfahrzeug in Längsrichtung ausfahrbaren und einziehbaren Greif- und Zugvorrichtung hintergriffen und auf die am Schleppfahrzeug im wesentlichen unverschieblich angeordnete Abstützfläche gezogen, wie zum Beispiel aus der DE-OS 33 18 077, 37 01 971 und 38 01 855 bekannt. Bei diesem Einzugsvorgang müssen sich das Flugzeug und das Schleppfahrzeug relativ zueinander bewegen, wobei wegen des großen Massenunterschiedes das Flugzeug stillsteht, vorzugsweise mit angezogenen Bremsen des Hauptfahrwerkes, und das Schleppfahrzeug beim Einzugsvorgang nach hinten gezogen wird, bis sich die Abstützfläche unter dem Bugrad befindet. Bei der anderen Variante des Aufnahmevorganges stehen das Flugzeug und das Schleppfahrzeug relativ zueinander still, und die Abstützfläche wird relativ zum Schleppfahrzeug nach hinten bewegt und unter das Bugrad eingeschoben. Ein das Bugrad hintergreifendes Widerlager sorgt dabei für die Festlegung des Bugrades relativ zum Schleppfahrzeug und verhindert, daß die beim Unterschieben der Abstützfläche auf das Bugrad ausgeübte Horizontalkraft das Bugfahrwerk belastet. Schleppfahrzeuge dieser Art sind aus der DE-OS 39 17 255 und EP 0 331 363 A1 bekannt.

Die Erfindung bezieht sich auf ein Schleppfahrzeug der erstgenannten Art, bei dem das von der Greifvorrichtung hintergriffene Bugrad auf die Abstützfläche gezogen wird. Ein Schleppfahrzeug der im Oberbegriff des Anspruchs 1 angegebenen Art ist insbesondere aus EP 0 276 779 A1 bekannt. Bei diesem bekannten Schleppfahrzeug ist die die Abstützfläche aufweisende Hubschaufel am Fahrgestell um eine horizontale Querachse schwenkbar gelagert und die die Greiforgane tragenden Zugarme sind mit der Hubschaufel starr verbunden, so daß sie beim Heben und Senken der Hubschaufel um den gleichen Betrag nach oben und unten bewegt werden und sich insbesondere beim Anheben der Hubschaufel mit dieser und dem ergriffenen Bugrad mitbewegen. Da sich bei diesem bekannten Schleppfahrzeug die Lage des Greiforgans relativ zur Hubschaufel beim Heb- und Senkvorgang nicht ändert, liegt das Greiforgan sowohl bei abgesenkter als auch bei angehobener Stellung der Hubschaufel an der gleichen Stelle des Bugradumfanges an. Liegt diese Stelle oberhalb der Drehachse des Bugrades, so kann das Greiforgan zwar eine nach unten gerichtete Niederhaltekraft auf das Bugrad ausüben, es besteht aber der Nachteil, daß die nach unten gerichtete Kraftkomponente bereits vorhanden ist, wenn das Bugrad auf die abgesenkte Hubschaufel gezogen werden soll. Dies ist nachteilig, weil beim Aufnahmevorgang wieder eine nach oben gerichtete Kraftkomponente erwünscht ist, die die Überwindung des Höhenunterschiedes zwischen der Fahrbahn und der abgesenkten Hubschaufel unterstützt. Es ist zwar aus der DE-OS 39 17 255 ein Schleppfahrzeug bekannt, welches eine aktiv nach hinten verschiebbare Hubschaufel aufweist und somit zur oben genannten zweiten Variante des Aufnahmevorgangs gehört, bei dem aber Zugarme, die das Bugrad hintergreifende Greiforgane tragen, unabhängig von der Hubschaufel vertikal schwenkbar sind, so daß das Greiforgan an eine gewünschte Stelle des Bugradumfanges gebracht werden kann. Hierfür sind jedoch zusätzliche hydraulische Stellzylinder mit entsprechenden Steuereinrichtungen erforderlich, was die Kompliziertheit und Fehleranfälligkeit der gesamten Aufnahmevorrichtung erhöht. Ferner haben beide vorgenannten Schleppfahrzeuge den Nachteil, daß Hubschaufel und Zugarme am Fahrgestell um horizontal starr festgelegte Achsen schwenkbar sind und somit keinen Freiheitsgrad der Bewegung relativ zur Längsachse des Schleppfahrzeuges haben. Dies bedeutet, daß das Schleppfahrzeug durch eine zu seiner Längsmittelebene exzentrische Belastung durch das Bugrad einseitig belastet und in seinen Fahreigenschaften beeinträchtigt werden kann. Eine solche exzentrische Belastung kann vorkommen einerseits durch eine nicht exakt mittig ausgerichtete Aufnahme des Bugrades auf der Abstützfläche und andererseits beim Kurvenfahren, da wegen der normalerweise in Längsrichtung geneigten Längsachse der Bugräder ein Lenkeinschlag des Bugrades mit einer Gewichtsverlagerung nach der Kurveninnenseite verbunden ist. Aus der bereits bekannten EP 0 276 779 A1 ist auch eine Ausführungsform des Schleppfahrzeuges bekannt, bei dem die Hubschaufel am Fahrgestell über vier ein Parallelogramm bildende Lenker heb- und senkbar geführt ist, wobei diese Lenker Neigungen der Hubschaufel um die Fahrzeuglängsachse zulassen; Querbewegungen der Hubschaufel zur Zentrierung eines exentrisch aufgenommenen Bugrades sind dabei aber nicht möglich.

Der Erfindung liegt die Aufgabe zugrunde, ein Schleppfahrzeug der genannten Art so auszubilden, daß mit konstruktiv und steuerungsmäßig möglichst einfachen Mitteln eine schonende Aufnahme und sichere Festlegung des Bugrades auf der Hubschaufel erfolgt und eine optimale Anpassung sowohl an unterschiedliche Bugraddurchmesser als auch an außermittige Belastungen durch das Bugrad möglich ist.

Die erfindungsgemäße Lösung der Aufgabe ist im Anspruch 1 angegeben.

Der besondere Vorteil des erfindungsgemäßen Schleppfahrzeuges liegt einerseits darin, daß die gesamte, aus Hubschaufel und Zugarmen bestehende Aufnahmevorrichtung durch Lagerung an dem in Querrichtung verschiebbaren und kippbaren Tragrahmen sowohl zur Zentrierung eines außermittig aufgenommenen Bugrades in Querrichtung verschoben werden kann, als auch beim Kurvenfahren sich den Neigungen des Bugrades anpassen kann. Andererseits liegt der Vorteil des erfindungsgemäßen Schleppfahrzeuges darin, daß die mit der Hubschaufel gekoppelten, aber um jeweils eine eigene Horizontalachse schwenkbaren Zugarme beim Heben der Hubschaufel eine Vertikalschwenkung durchführen, bei der sich die Greiforgane stärker nach oben bewegen als die Hubschaufel, so daß sich im Verlauf der Hubbewegung der Angriffspunkt der Greiforgane am Hubradumfang nach oben verlagert, ohne daß für diese relativ zur Hubschaufel übersetzte Vertikalbewegung der Greiforgane ein eigener Stellantrieb erforderlich wäre. Die Vertikalbewegung der Greiforgane ist übrigens um so größer, je weiter die Zugarme ausgefahren sind, d.h., je größer der Durchmesser des Bugrades ist. Dies bedeutet, daß sowohl bei kleinen als auch bei großen Bugrädern jeweils die richtige Verlagerung des Angriffspunktes des Greiforgans am Bugradumfang während des Hubvorganges stattfindet.

Weitere vorteilhafte Ausgestaltungen der Erfindung sind in den Unteransprüchen angegeben.

Gemäß einer besonders bevorzugten Ausführungsform der Erfindung wird die Einspannkraft, mit der die Greiforgane nach abgeschlossenem Hubvorgang das Bugrad auf der Hubschaufel festlegen, durch einen Druckregler in Abhängigkeit von der Ausziehlänge der Zugarme, und damit in Abhängigkeit vom Bugraddurchmesser festgelegt. Damit wird der Tatsache Rechnung getragen, daß Bugräder größeren Durchmessers normalerweise auch zu größeren und schwereren Flugzeugen gehören und deshalb eine höhere Einspannkraft erfordern als Bugräder kleineren Durchmessers.

Eine Ausführungsform der Erfindung wird anhand der Zeichnung näher erläugert. Es zeigt:
- Fig. 1: einen schematischen Längsschnitt durch ein Schleppfahrzeug gemäß einer Ausführungsform der Erfindung bei angehobener Hubschaufel;
- Fig. 2: einen Schnitt ähnlich Fig. 1 bei abgesenkter Hubschaufel und mit Darstellung zusätzlicher Details;
- Fig. 3: eine schematische und vereinfachte Schnittdarstellung nach der Linie III-III von Fig. 2;
- Fig. 4: einen schematischen Längsschnitt durch einen Zugarm.

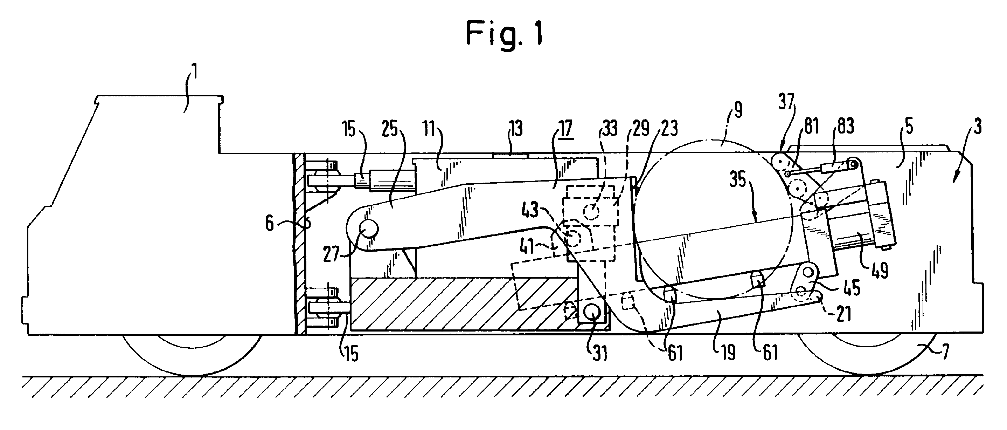

Das in Fig. 1 schematisch dargestellte Schleppfahrzeug für das zugstangenlose Manövrieren von Flugzeugen hat ein im hinteren Bereich gabelförmig ausgeschnittenes Fahrgestell 1, so daß ein nach hinten offener Ausschnitt 3 gebildet wird, der nach beiden Seiten von je einem Schenkel 5 des Fahrgestells begrenzt wird, an dem auch das entsprechende Hinterrad 7 des Fahrzeugs gelagert ist. In dem Ausschnitt 3 ist eine im folgenden beschriebene Aufnahmevorrichtung angeordnet, mit der ein von hinten in den Ausschnitt 3 eingefahrenes Bugrad 9 eines Flugzeugs ergriffen, angehoben und festgelegt werden kann. Die gesamte Aufnahmevorrichtung ist an einem Tragrahmen 11 gelagert, der in dem Ausschnitt 3 mittels beiderseits angeordneter Lenkeraufhängungen 13 auf jedem Fahrgestellschenkel 5 gelagert ist. Diese Lenkeraufhängungen 13, die noch näher beschrieben werden, ermöglichen Kippbewegungen des Tragrahmens 11 um eine in Längsrichtung des Fahrzeugs 1 verlaufende horizontale Achse und begrenzte Querverschiebungen des Tragrahmens 11 relativ zum Fahrgestell. In Längsrichtung des Fahrzeugs ist der Tragrahmen 11 gegen die den Ausschnitt 3 begrenzende Stirnwand 6 des Fahrgestells durch vier Lenker 15 abgestützt, die ein parallelogramm bilden, welches die Querbewegungen des Tragrahmens 11 nicht behindert. Vorzugsweise sind die Lenker 15 längenverstellbar ausgebildet.

Für das Aufnehmen und Abstützen des Bugrades 9 dient eine Hubschaufel 17, die eine etwa horizontal gerichtete Abstützplattform 19 aufweist, deren nach hinten gerichtete freie Kante mit einer oder mehreren Rollen 21 für das Erleichtern des Aufnahmevorgangs versehen sein kann. Die Hubschaufel 17 weist ferner eine etwa lotrechte Anschlagfläche 23 für das Bugrad auf und ist mittels nach vorne gerichteter Seitenwangen 25 an entsprechenden Lagerkonsolen im vorderen Bereich des Tragrahmens 11 um eine horizontale Achse 27 schwenkbar gelagert. Zum Heben und Senken der Hubschaufel 17 ist ein hydraulisches Kolben-Zylinder-Aggregat 29 vorgesehen, das in Anlenkpunkten 31 am Tragrahmen 11 bzw. 33 an der Hubschaufel 17 angelenkt ist.

Ebenfalls an dem Tragrahmen 11 sind zwei teleskopische Zugarme 35 schwenkbar gelagert, die sich beiderseits der Hubschaufel 17, unmittelbar angrenzend an die Wandung des Fahrgestellschenkels 5, parallel zur Fahrzeuglängsachse nach hinten erstrecken und an ihrem freien Ende je ein Greiforgan 37 tragen, mit dem das Bugrad 9 hintergriffen, auf die Plattform 19 der Hubschaufel 17 gezogen und gegen diese und die Anschlagfläche 23 festgespannt werden kann. Die Hubarme 35 sind symmetrisch bezüglich der Längsmittelebene des Schleppfahrzeugs 1 angeordnet und ausgebildet, und deshalb wird nur einer der Hubarme 35 in den Zeichnungen dargestellt und im folgenden beschrieben.

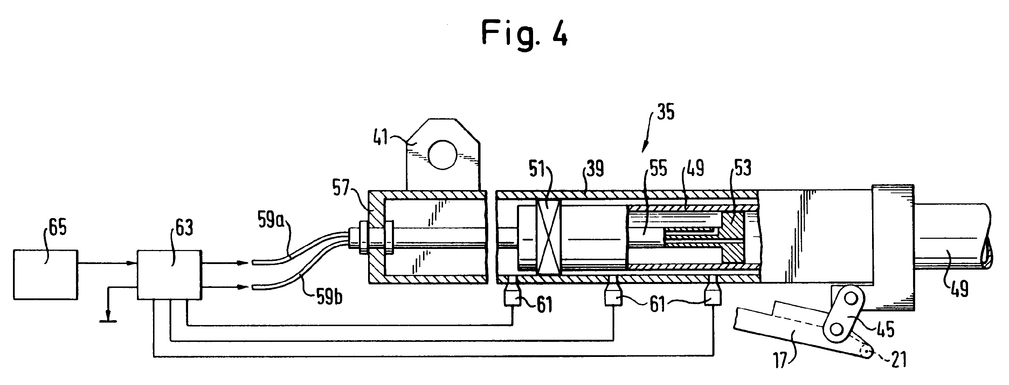

Wie aus Fig. 1 in Verbindung mit Fig. 4 erkennbar ist, weist jeder Zugarm 35 ein Führungsrohr 39 mit Vierkantguerschnitt auf, das mittels einer Lagerlasche 41 an einer horizontalen Lagerachse 43 (Fig. 1) des Tragrahmens 11 gelagert und somit in vertikaler Ebene schwenkbar ist. An seinem freien Ende ist das Führungsrohr 39 über eine Gelenklasche 45 mit der Hubschaufel 17 nahe an deren Vorderkante gelenkig verbunden. In dem Führungsrohr 39 ist der Zylinder 49 eines hydraulischen Kolben-Zylinder-Aggregats verschiebbar geführt, und zwar mittels eines den Zylinder 49 umgebenden und mit diesem starr verbundenen Gleitsteins 51, der einen den Innenquerschnitt des Führungsrohres 39 angepaßten vierkantigen Umriß hat. Der Zylinder 49 ist somit in dem Führungsrohr 39 längsverschieblich, aber unverdrehbar geführt. Dies ist wichtig, weil durch das vom Zylinder 49 getragene Greiforgan 37 beim Einspannen des Bugrades 9 nicht nur eine Zugkraft in Längsrichtung des Zylinders 49, sondern auch ein Drehmoment um die Zylinderachse ausgeübt wird, welches über das Führungsrohr 39 und seine Gelenklagerung 41, 43 am Tragrahmen abgestützt werden muß.

In dem Zylinder 49 befindet sich ein stationärer Kolben 53, dessen Kolbenstange 55 an der Endwandung 57 des Führungsrohrs 39 starr befestigt ist. Im Innern der Kolbenstange 55 sind Druckmittelkanäle ausgebildet, die vor bzw. hinter dem Kolben 53 ausmünden. Durch Zufuhr von Druckmittel zu den Anschlüssen 59a, 59b dieser Kanäle kann somit Druckmittel in den Zylinderraum auf der einen oder anderen Seite des Kolbens 53 zugeführt werden und dadurch der Zylinder 49 in Fig. 4 nach rechts oder links verschoben werden, um den gesamten teleskopischen Zugarm 35 zu verlängern oder zu verkürzen.

Wie ferner aus Fig. 4 ersichtlich, sind an der Wandung des Führungsrohres 39 in Längsabständen Sensoren 61 angeordnet, mit denen die Ausfahrposition des Zylinders 49 erfaßt werden kann. Diese Sensoren 61 können z.B. als Schalter ausgebildet sein, die durch den Gleitstein 51 betätigt werden, oder es kann sich um berührungsfreie Sensoren handeln. Die Signale der Sensoren 61 gelangen in einen Druckregler 63, der den von einer Hydrauliksteuerung 65 zugeführten Hydraulikdruck für das Verkürzen des Teleskoparms 35 auf einen Maximalwert begrenzen kann, wobei mehrere Maximalwerte zur Verfügung stehen, die entprechend den Signalen von den Sensoren 61 ausgewählt werden. Dabei wird ein um so höherer Maximalwert ausgewählt, je weiter der Zylinder 49 aus dem Führungsrohr 39 ausgefahren ist. Diese Druckbegrenzung kann beispielsweise durch eine Anzahl von Druckbegrenzungsventilen (nicht dargestellt) mit unterschiedlich eingestelltem Öffnungsdruck realisiert werden, die vom Druckregler 63 wahlweise angesteuert werden.

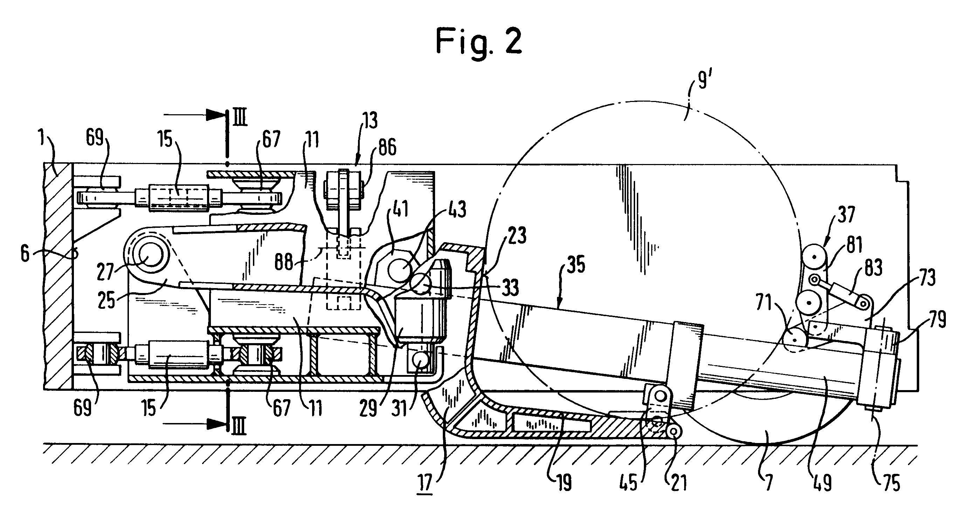

Während in Fig. 1 das Schleppfahrezug 1 mit angehobener Hubschaufel und einem eingespannten Bugrad 9 von kleinem Durchmesser dargestellt ist, zeigt Fig. 2 die Aufnahmevorrichtung des Schleppfahrzeugs 1 bei abgesenkter Hubschaufel während des Aufnehmens eines Bugrades 9′ von größerem Durchmesser. In Fig. 2 sind ferner zusätzliche Details dargestellt. So erkennt man aus Fig. 2, daß der Tragrahmen 11 als geschweißte Kastenkonstruktion ausgebildet ist und sphärische Lager 67 für die längenverstellbaren Lenker 15 aufweist, die an der Stirnwand der Fahrgestellausnehmung 3 ebenfalls in sphärischen Lagern 69 gelagert sind.

Das am Ende des ausfahrbaren Zylinders 49 angeordnete Greiforgan 37 besteht hauptsächlich aus einer Abstützrolle 71, die an einem Träger 73 gelagert ist, der um eine etwa vertikale Achse 75 geschwenkt werden kann, und zwar mittels eines hydraulischen Drehmotors 79. Hierdurch kann das gesamte Greiforgan in eine zur Achse des Zylinders parallele Stellung gebracht werden, um das Passieren des Bugrades 9 in die Ausnehmung 3 nicht zu behindern. An dem Träger 73 ist oberhalb der Rolle 71 ein als Niederhalter dienender Rollenbock 81 schwenkbar gelagert, der zwei oder mehr Rollen trägt und mittels eines Hydraulikzylinders 83 gegen den Umfang des Bugrades 9 gedrückt werden kann, um auf dieses eine zusätzliche Niederhaltekraft mit einer nach unten gerichteten Kraftkomponente auszuüben.

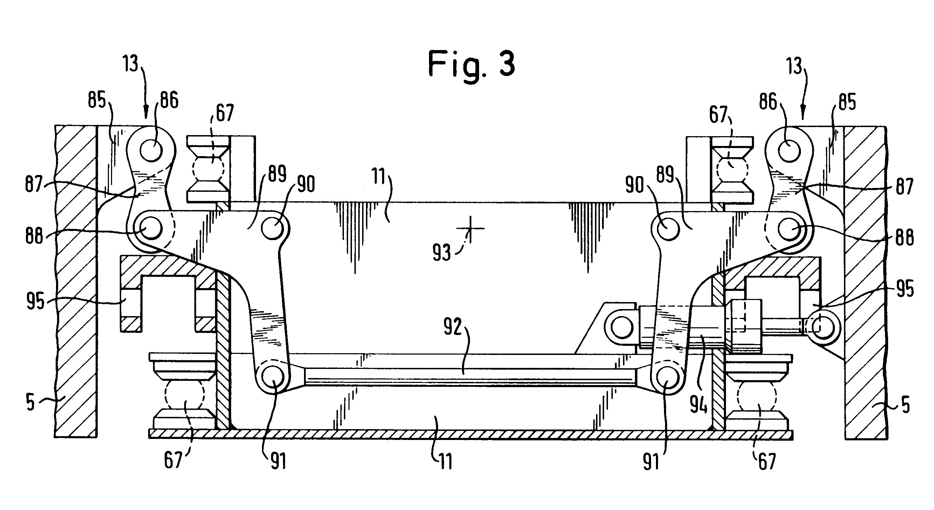

Fig. 3 zeigt im Querschnitt die Einzelheiten der Gelenkaufhängung 13 für den Tragrahmen 11. Letzterer ist vereinfacht dargestellt, und insbesondere sind die Hubschaufel 17 und die Zugarme 35 in Fig. 3 weggelassen. An jedem der beiden Fahrgestellschenkel 5 ist eine nach innen vorspringende Lagerkonsole 85 angeordnet, an der um eine Drehachse 86 schwenkbar ein Lasche 87 aufgehängt ist. Am unteren Ende einer jeden Lasche 87 ist um eine Gelenkachse 88 drehbar eine Winkel- oder Dreieckslasche 89 gelagert, an der in je einem Drehlager 90 der Tragrahmen 11 aufgehängt ist. Zwischen den Gelenkachsen 88, 90 bildet jede Dreieckslasche 89 einen im wesentlichen horizontalen Hebelarm. Am unteren Ende jeder Dreieckslasche 89 ist um je eine Gelenkachse 91 drehbar eine Koppelstange 92 gelagert, die die beiden Dreieckslaschen 89 zugfest miteinander verbindet. Die Dreieckslaschen 89 und die Koppelstange 92 bilden ein Gelenkviereck mit den Eckpunkten in den Gelenklagern 90, 91. Durch die freie Verformbarkeit dieses Gelenkvierecks in den Gelenkpunkten 90, 91 kann der Tragrahmen 11 Dreh- oder Kippbewegungen um eine virtuelle Längsachse, die etwa bei 93 liegen kann, ausführen und sich dadurch etwaigen Neigungen des aufgenommenen Bugrades anpassen. Die oberen Laschen 87 bilden zusammen mit den daran über die Dreieckslaschen 89 aufgehängten Tragrahmen 11 ein Gelenkparallelogramm mit den Eckpunkten bei den Gelenkachsen 86, 88. Mittels dieses Gelenkparallelogramms kann der Tragrahmen 11 im wesentlichen parallel zu sich selbst quer zum Fahrgestell verschoben werden. Ein hydraulischer Stellzylinder 94 ist einerseits am Tragrahmen 11 und andererseits an einem Schenkel 5 des Fahrgestells angelenkt und dient zum Verschieben des Tragrahmens 11 in Querrichtung. Auf diese Weise ist eine Zentrierung der Aufnahmevorrichtung in bezug auf das aufzunehmende Bugrad möglich. Wenn sich beim Heranfahren des Schleppfahrzeugs 1 an das Bugrad 9 das Bugrad nicht exakt mittig in der Ausnehmung 3 befindet, so kann durch Betätigen des Hydraulikzylinders 94 der Tragrahmen 11 und damit die gesamte Aufnahmevorrichtung ebenfalls in eine außermittige Stellung gebracht und in bezug auf das Bugrad zentriert werden. Nach dem Aufnehmen des Bugrades kann dann die gesamte Aufnahmevorrichtung mit dem aufgenommenen Bugrad durch entsprechende Betätigung des Hydraulikzylinders 94 in die bezüglich des Fahrgestells mittige Position gebracht werden.

Aus Fig. 3 ist noch ersichtlich, daß die Lager 67 für die den Tragrahmen 11 in Längsrichtung abstützenden Lenker 15 (Fig. 1) durch vom Tragrahmen 11 nach außen vorspringende Konsolen gebildet werden. Ebenfalls vom Tragrahmen 11 seitlich vorspringend sind Lagerösen 95 vorgesehen, die zur Aufnahme der horizontalen Lagerachsen 43 für die Zugarme 39 (in Fig. 3 nicht dargestellt) dienen.

Das Aufnehmen eines Bugrades mit dem erfindungsgemäßen Schleppfahrzeug läuft wie folgt ab. Mittels der Hubzylinder 29 wird die Hubschaufel 17 in ihre untere Stellung abgesenkt, in der sie sich dicht über der Fahrbahn 2 befindet. Die Zylinder 49 der Zugarme 35 werden auf ihre volle Länge ausgefahren und zwar vorteilhafterweise soweit, daß sich die Greiforgane 37 außerhalb der Ausnehmung 3 des Fahrgestells 1 befinden, so daß die Schenkel 5 des Fahrgestells das Ausschwenken der Greiforgane 37 in die zu den Zugarmen 35 parallele Stellung nicht behindern. Das Schleppfahrzeug wird rückwärts an das Bugfahrwerk herangefahren, bis die Rolle 21 an der freien Kante der Schaufelplattform 19 das Bugrad berührt. Dies kann durch einen Sensor gemeldet werden, der dann die automatische Beendigung der Rückwärtsfahrt und die Freigabe des automatisch ablaufenden Aufnahmevorgangs steuert. Die Greiforgane 37 werden dann mittels der Drehmotoren 79 in die die Bugräder hintergreifende Stellung eingeschwenkt, und die Zylinder 49 der Zugarme 35 werden durch Druckmittelzufuhr zu dem Anschluß 59a eingefahren, so daß die Andrückrollen 51 das Bugrad ergreifen und auf die Schaufelplattform 19 hinaufbewegen. Da die mit der Schaufel gekoppelten Zugarme 35 abgesenkt sind, liegt der Angriffspunkt der Andrückrolle 71 im unteren Quadranten des Bugradumfangs, so daß die Zugkraft eine nach oben gerichtete Komponente aufweist, die das Aufnehmen des Bugrades auf der Schaufelplattform 19 unterstützt. Wenn das Bugrad an der Anschlagfläche 23 anschlägt, was ebenfalls durch einen Sensor gemeldet werden kann, wird durch Betätigung des Hubzylinders 29 die Hubschaufel 17 angehoben, bis sie sich in ihrer oberen Stellung mit maximaler Bodenfreiheit gemäß Fig. 1 befindet. Die mit der Hubschaufel 17 über die Gelenklasche 45 gekoppelten Zugarme 35 werden dabei um die Schwenkachse 43 nach oben verschwenkt. Dabei wird das Greiforgan 37 um einen größeren Weg nach oben bewegt als die Schaufelplattform 19, so daß sich der Angriffspunkt der Andrückrolle 71 am Bugrad 9 nach oben bis über die Drehachse des Bugrades verlagert. Der vertikale Weg des Greiforgans 37 hängt von dem Verhältnis der Abstände zwischen der Lagerachse 43 und der Gelenklasche 45 bzw. zwischen der Gelenklasche 45 und dem Greiforgan 37 ab und ist somit um so größer, je weiter der Zylinder 49 des Zugarms 35 ausgefahren ist. Bei Bugrädern großen Durchmessers findet deshalb eine stärkere Verlagerung der Andrückrolle 71 bzw. des gesamten Greiforgans 37 nach oben statt als bei kleinen Bugrädern.

Nach Beendigung des Aufnahmevorgangs wird der Zylinder 49 über den Druckmittelanschluß 59a mit einem vorgegebenen Hydraulikdruck beaufschlagt, um das Bugrad 9 mit einer vorgegebenen Einspannkraft auf der Hubschaufel 17 festeinzuspannen. Wie bereits erläutert, wird der Wert dieses vorgegebenen Einspanndrucks durch den Druckregler 63 unter mehreren vorgegebenen Werten ausgewählt und zwar entsprechend der durch die Sensoren 61 gemeldeten Ausfahrlänge des Zylinders 49, die wiederum vom Durchmesser des aufgenommenen Bugrades 9 bzw. 9′ abhängt. Bugräder großen Durchmessers werden daher mit einer größeren Einspannkraft beaufschlagt, als kleine Bugräder. Im Normalfall haben die größeren und schwereren Flugzeugtypen auch Bugräder größeren Durchmessers als kleinere Flugzeugtypen. Durch die mit zunehmendem Bugraddurchmesser zunehmende Einspannkraft wird deshalb erreicht, daß die Bugräder größerer und schwerer Flugzeuge mit einer entsprechend größeren Einspannkraft am Schleppfahrzeug eingespannt werden, während andererseits vermieden wird, daß die kleineren Bugräder kleinerer Flugzeuge mit einer unnötig hohen Einspannkraft beaufschlagt werden.

Durch Beaufschlagung des Hydraulikzylinders 83 mit Druckmittel (über nicht dargestellte Zuführleitungen) können zusätzlich die Rollen des Rollenbocks 81 oberhalb der Andrückrolle 71 gegen den Bugradumfang angedrückt werden, so daß der Rollenbock 81 als Niederhalter dient, um eine zusätzliche nach unten gerichtete Niederhaltekraft auf das Bugrad 9 bzw. 9′ auszuüben. Dabei kann die vom Niederhalter 81 ausgeübte Niederhaltekraft unabhängig von der mittels des Zylinders 89 und der Andrückrolle 71 ausgeübten Einspannkraft gewählt werden. Vorzugsweise wird auch der dem Hydraulikzylinder 83 zugeführte Druck durch den Druckregler 63 in Abhängigkeit von der Ausfahrlänge der Zugarme 35 so festgelegt, daß auch die Niederhaltekraft um so größer ist, je größer der Bugraddurchmesser ist.

Die beschriebenen Vorgänge beim Aufnehmen können mittels einer automatischen Folgesteuerung automatisiert sein, so daß sie weitgehend selbsttätig in Abhängigkeit von den Signalen von Sensoren und Endpositionsmeldern ablaufen, d.h. ohne laufenden Eingriff durch den Fahrer des Schleppfahrzeuges.

## Patentansprüche

1. Schleppfahrzeug für Flugzeuge mit einem im hinteren Bereich gabelförmig ausgeschnittenen Fahrgestell (1) und einer in dem Ausschnitt (3) angeordneten Aufnahmevorrichtung zum Abstützen und Festlegen des Bugrades (9) eines Flugzeuges, bestehend aus einer Hubschaufel (17), die um eine horizontale Achse (27) schwenkbar, aber im wesentlichen nicht längsverschiebbar gelagert ist, und zwei beiderseits der Hubschaufel (17) in Längsrichtung angeordneten teleskopischen Zugarmen (35), die mittels Hydraulikzylinder (49) ein- und ausfahrbar sind und an ihren freien Enden horizontal schwenkbare Greiforgane (37) tragen, mit denen das Bugrad (9) hintergriffen, durch Verkürzen der Zugarme (35) auf die abgesenkte Hubschaufel (17) gezogen und dann auf dieser festgelegt werden kann, wobei die Hubschaufel (17) mittels einer Hubeinrichtung (29) heb- und senkbar ist und die Zugarme mit der Hubschaufel zu gemeinsamer Vertikalbewegung mechanisch gekoppelt sind,
gekennzeichnet durch folgende Merkmale:
a) im Ausschnitt (3) des Fahrgestells ist ein Tragrahmen (11) angeordnet, der mittels beiderseits angeordneter Lenkeraufhängungen (13) in Querrichtung kippbar und verschiebbar gelagert ist;
b) an dem Tragrahmen (11) sind die Hubschaufel (17) und die Zugarme (35) um verschiedene, in Längsrichtung gegeneinander versetzt angeordnete horizontale Lagerachsen (27, 43) schwenkbar gelagert;
c) die Zugarme (35) sind mit der Hubschaufel (17) über je eine Gelenklasche (45) derart gekoppelt, daß sie bei Vertikalbewegung der Hubschaufel (17) Schwenkbewegungen um ihre Lagerachsen (43) durchführen, wodurch die Greiforgane (37) über eine größere vertikale Hubstrecke bewegt werden als die Hubschaufel (17).

2. Schleppfahrzeug nach Anspruch 1,
dadurch gekennzeichnet,
daß jedes Greiforgan (37) einen um eine horizontale Achse schwenkbaren Niederhalter (81) aufweist, der durch eine Andrückvorrichtung (83) mit einer zusätzlichen Niederhaltekraft beaufschlagbar ist.

3. Schleppfahrzeug nach Anspruch 1,
dadurch gekennzeichnet,
daß ein Druckregler vorgesehen ist, der nach Abschluß des Aufnahmevorgangs eine Beaufschlagung der Hydraulikzylinder (49) der Zugarme (35) und/oder der Andrückvorrichtung (83) den Niederhalter (81) mit einem vorgegebenen Dauerdruck zum Ausüben einer vorgegebenen Einspannkraft auf das Bugrad (9) steuert, und daß ein oder mehrere Sensoren (61) zum Erfassen der Ausfahrstellung der Zugarme (35) vorgesehen sind und der Druckregler (63) den Dauerdruck bei größerer oder kleinerer Ausfahrlänge auf einen entsprechend größeren oder kleineren Wert festlegt.

4. Schleppfahrzeug nach Anspruch 1,
dadurch gekennzeichnet,
daß jeder Zugarm (35) folgende Teile aufweist:
- ein um die horizontale Lagerachse (43) schwenkbar gelagertes Führungsrohr (39) mit nicht kreisförmigen Querschnitt;
- einen Zylinder, der mittels eines nicht kreisförmigen Führungselementes (51) in dem Führungsrohr (59) längsverschiebbar, aber unverdrehbar geführt ist;
- einem, in dem Zylinder (49) angeordneten Kolben (53), dessen Kolbenstange (55) am Führungsrohr (39) unverschiebbar festgelegt ist und Druckmittelkanäle zu den Arbeitsräumen beiderseits des Kolbens (53) enthält, durch die Druckmittel zum Verschieben des Zylinders (49) zu- und abführbar ist.

5. Schleppfahrzeug nach Anspruch 4,
dadurch gekennzeichnet,
daß das Führungsrohr (39) durch die Gelenklasche (45) mit der Hubschaufel (17) gekoppelt ist.

6. Schleppfahrzeug nach Anspruch 1,
dadurch gekennzeichnet,
daß der Abstand zwischen der Lagerachse (43) jedes Zugarms (35) und der Gelenklasche (45) in Relation zur Hubstrecke der Hubschaufel (17) und der dem jeweiligen Bugraddurchmesser entsprechenden Ausfahrlänge des Zugarmes (35) so bemessen ist, daß die beim Hub der Hubschaufel (17) durchgeführte Schwenkung jedes Zugarms (35) das von diesem getragene Greiforgan aus einer Position unterhalb der Achse des Bugrades in einer Position oberhalb der Achse des Bugrades bringt.

7. Schleppfahrzeug nach Anspruch 1,
dadurch gekennzeichnet,
daß der Tragrahmen (11) auf jeder Längsseite mittels einer Winkellasche (89) aufgehängt ist, die einen zweiarmigen Winkelhebel bildet, dessen einer Hebelarm (88-90) mit dem Tragrahmen (11) gelenkig verbunden ist, während die anderen, nach unten ragenden Hebelarme (90-91) der beiden Winkellaschen (89) miteinander über eine in Querrichtung des Schleppfahrzeugs verlaufende Koppelstange (93) verbunden sind derart, daß die Hebelarme, der Tragrahmen und die Koppelstange ein mindestens begrenzt frei verformbares Gelenkviereck bilden.

8. Schleppfahrzeug nach Anspruch 7,
dadurch gekennzeichnet,
daß jede Winkellasche (89) am entsprechenden Fahrgestell des Schenkels (5) über eine weitere Lasche (87) aufgehängt ist, wobei die Anlenkpunkte (86, 88) der Laschen am Fahrgestell bzw. an den Winkellaschen (59) mindestens annähernd ein Gelenkparallelogramm bilden, bei dessen Verformung der Tragrahmen (11) sich quer zum Fahrgestell verschiebt, und daß ein Stellantrieb (94) zum Zentrieren und Festlegen des Tragrahmens (11) in Querrichtung des Fahrgestells vorgesehen ist.

## Claims

1. Aircraft towing vehicle with a chassis (1) cut out in the shape of a fork in the rear region and a receiving device located in the cut out (3) for supporting and fixing the nose-wheel (9) of an aircraft, consisting of a lifting scoop (17), which is able to tilt about a horizontal pivot (27), but is essentially not mounted to move longitudinally, and two telescopic tension arms (35) arranged in the longitudinal direction on both sides of the lifting scoop (17), which tension arms can be retracted and extended by means of hydraulic cylinders (49) and at their free ends support gripping members (37) able to tilt horizontally, with which it is possible to engage behind the nose-wheel (9), which by shortening of the tension arms (35) can be pulled onto the lowered lifting scoop (17) and then can be fixed thereon, the lifting scoop (17) being able to be raised and lowered by means of a lifting device (29) and the tension arms being mechanically connected to the lifting scoop for common vertical movement, characterised by the following features:
a) located in the cut out (3) of the chassis is a support frame (11), which by means of guide rod suspensions (13) located on both sides is mounted to be tiltable in the transverse direction and displaceable;
b) the lifting scoop (17) and the tension arms (35) are mounted on the support frame (11) so that they are able to tilt about different horizontal pivots (27, 43) arranged to be offset with respect to each other in the longitudinal direction;
c) the tension arms (35) are connected to the lifting scoop (17) by way of respectively one joint plate (45) so that at the time of the vertical movement of the lifting scoop (17), they carry out tilting movements about their pivots (43), due to which the gripping members (37) are moved over a greater vertical lifting distance than the lifting scoop (17).

2. Towing vehicle according to Claim 1, characterised in that each gripping member (37) has a holding-down device (81) able to tilt about a horizontal axis, which due to a pressing device (83) may be acted upon by an additional holding-down force.

3. Towing vehicle according to Claim 1, characterised in that a pressure regulator is provided, which after the termination of the receiving operation controls an actuation of the hydraulic cylinders (49) of the tension arms (35) and/or the pressing device (83) controls the holding-down means (81) with a predetermined continuous pressure for exerting a predetermined clamping force on the nose-wheel (9) and that one or more sensors (61) are provided for ascertaining the extended position of the tension arms (35) and the pressure regulator (63) fixes the continuous pressure, in the case of a greater or smaller extended length, at a correspondingly greater or smaller value.

4. Towing vehicle according to Claim 1, characterised in that each tension arm (35) comprises the following parts:
- a guide tube (39) with a non-circular cross-section, mounted to tilt about the horizontal pivot (43);
- a cylinder, which by means of a non-circular guide member (51) is guided to slide longitudinally, but non-rotatably, in the guide tube (59);
- a piston (53) located in the cylinder (49), whereof the piston rod (55) is fixed in a non-displaceable manner to the guide tube (39) and contains pressure medium channels leading to the working chambers on both sides of the piston (53), through which pressure medium can be supplied and discharged for the displacement of the cylinder (49).

5. Towing vehicle according to Claim 4, characterised in that the guide tube (39) is connected by the joint plate (45) to the lifting scoop (17).

6. Towing vehicle according to Claim 1, characterised in that the distance between the pivot (43) of each tension arm (35) and the joint plate (45) in relation to the lifting distance of the lifting scoop (17) and the extension length of the tension arm (35) corresponding to the respective nose-wheel diameter is dimensioned so that the tilting of each tension arm (35) carried out at the time of the stroke of the lifting scoop (17) brings the gripping member supported by the tension arm from a position below the axis of the nose-wheel into a position above the axis of the nose-wheel.

7. Towing vehicle according to Claim 1, characterised in that on each longitudinal side, the support frame (11) is suspended by means of an angle plate (89), which forms a two-armed angle lever, whereof one lever arm (88-90) is pivotally connected to the support frame (11), whereas the other downwardly projecting lever arms (90-91) of the two angle plates (89) are connected to each other by way of a connecting rod (93) extending in the transverse direction of the towing vehicle so that the lever arms, the support frame and the connecting rod form a joint quadrilateral which is freely deformable at least in a limited manner.

8. Towing vehicle according to Claim 7, characterised in that each angle plate (89) is suspended from the corresponding chassis of the side (5) by way of a further plate (87), the pivot points (86, 88) of the plates on the chassis or on the angle plates (59) forming at least approximately a joint parallelogram, upon the deformation of which the support frame (11) moves at right angles to the chassis and that an adjusting drive (94) is provided for centering and fixing the support frame (11) in the transverse direction of the chassis.

## Revendications

1. Véhicule de remorquage d'avions, présentant un châssis de roulement (1) échancré en forme de fourche dans la région postérieure, et un dispositif récepteur logé dans l'évidement (3), conçu pour soutenir et emprisonner la roue avant d'atterrissage (9) d'un avion, et comprenant une pale de levage (17) montée, autour d'un axe horizontal (27), avec faculté de pivotement mais pour l'essentiel sans aucune faculté de coulissement longitudinal, et deux bras télescopiques de traction (35) situés de part et d'autre de la pale de levage (17) dans le sens longitudinal, pouvant être rétractés et déployés au moyen de vérins hydrauliques (49) et portant, à leurs extrémités libres, des organes de préhension (37) qui peuvent pivoter horizontalement et à l'aide desquels la roue avant d'atterrissage (9) peut être saisie par-derrière, tirée sur la pale de levage (17) abaissée, par raccourcissement des bras de traction (35), puis emprisonnée sur ladite pale, cette pale de levage (17) pouvant être soulevée et abaissée au moyen d'un dispositif de levage (29), et les bras de traction étant accouplés mécaniquement à la pale de levage, en vue d'un mouvement vertical commun,
caractérisé par les particularités suivantes :
a) un cadre de support (11) disposé dans l'évidement (3) du châssis de roulement est monté, au moyen de suspensions (13) par biellettes situées de part et d'autre, avec faculté de basculement et de coulissement dans le sens transversal ;
b) la pale de levage (17) et les bras de traction (35) sont montés à pivotement, sur le cadre de support (11), autour de différents axes horizontaux de montage (27, 43) mutuellement décalés dans le sens longitudinal ;
c) les bras de traction (35) sont accouplés à la pale de levage (17) par l'intermédiaire d'une attache respective d'articulation (45), de telle sorte qu'ils accomplissent, lors d'un mouvement vertical de la pale de levage (17), des pivotements autour de leurs axes de montage (43), si bien que les organes de préhension (37) sont déplacés d'une plus grande course verticale que la pale de levage (17).

2. Véhicule de remorquage selon la revendication 1,
caractérisé par le fait
que chaque organe de préhension (37) présente une pièce (81) de blocage par compression, qui peut pivoter autour d'un axe horizontal et peut être sollicitée, par l'intermédiaire d'un dispositif de compression (83), par une force supplémentaire de consignation à demeure.

3. Véhicule de remorquage selon la revendication 1,
caractérisé par le fait
qu'il est prévu un régulateur de pression qui, à l'achèvement du processus de prise en charge, commande une sollicitation des vérins hydrauliques (49) des bras de traction (35) et/ou du dispositif de compression (83) de la pièce (81) de blocage par compression, à l'aide d'une pression permanente préétablie, en vue d'appliquer une force d'enserrement préétablie à la roue avant d'atterrissage (9) ; et par le fait qu'un ou plusieurs capteur(s) (61) est (sont) prévu(s) pour détecter la position déployée des bras de traction (35) et, en présence d'une longueur de déploiement supérieure ou inférieure, le régulateur de pression (63) assigne à la pression permanente une valeur conséquemment supérieure ou inférieure.

4. Véhicule de remorquage selon la revendication 1,
caractérisé par le fait
que chaque bras de traction (35) présente les parties suivantes :
- un tube de guidage (39) de section transversale non circulaire, monté à pivotement autour de l'axe horizontal de montage (43) ;
- un cylindre guidé dans le tube de guidage (39), au moyen d'un élément de guidage (51) non circulaire, avec faculté de coulissement longitudinal mais sans faculté de rotation ;
- un piston (53) logé dans le cylindre (49) et dont la tige (55) est consignée à demeure, sur le tube de guidage (39), sans faculté de coulissement, et renferme des canaux de circulation d'un fluide pressurisé gagnant les chambres de travail de part et d'autre du piston (53), et par l'intermédiaire desquels un fluide pressurisé peut être admis et évacué pour faire coulisser le cylindre (49).

5. Véhicule de remorquage selon la revendication 4,
caractérisé par le fait
que le tube de guidage (39) est accouplé à la pale de levage (17) par l'intermédiaire de l'attache d'articulation (45).

6. Véhicule de remorquage selon la revendication 1,
caractérisé par le fait
que la distance comprise entre l'axe de montage (43) de chaque bras de traction (35) et l'attache d'articulation (45) est dimensionnée, en relation avec la course de la pale de levage (17) et avec la longueur de déploiement du bras de traction (35), correspondant au diamètre considéré de la roue avant d'atterrissage, de telle sorte que le pivotement de chaque bras de traction (35), effectué lors de la course de la pale de levage (17), amène l'organe de préhension, porté par ledit bras, d'une position située au-dessous de l'axe de la roue avant d'atterrissage à une position située au-dessus de l'axe de la roue avant d'atterrissage.

7. Véhicule de remorquage selon la revendication 1,
caractérisé par le fait
que le cadre de support (11) est suspendu, sur chaque côté longitudinal, au moyen d'une attache (89) en cornière, qui forme un levier coudé à deux bras dont l'un (88-90) des bras est relié, de manière articulée, au cadre de support (11), tandis que les autres bras de levier (90-91) des deux attaches (89) en cornière, saillant vers le bas, sont mutuellement reliés par l'intermédiaire d'une biellette d'accouplement (93) s'étendant dans le sens transversal du véhicule de remorquage, de telle sorte que les bras de levier, le cadre de support et la biellette d'accouplement forment un rectangle articulé pouvant être déformé au moins de manière limitée.

8. Véhicule de remorquage selon la revendication 7,
caractérisé par le fait
que chaque attache (89) en cornière est suspendue au châssis de roulement correspondant de l'aile (5) par l'intermédiaire d'une autre attache (87), les points d'articulation (86, 88) des attaches, respectivement sur le châssis de roulement ou sur les attaches (89) en cornière, formant au moins approximativement un parallélogramme articulé au cours de la déformation duquel le cadre de support (11) coulisse transversalement par rapport au châssis de roulement ; et par le fait qu'un entraînement de réglage (94) est prévu pour le centrage et la consignation à demeure du cadre de support (11) dans le sens transversal du châssis de roulement.
